# FASCICULE DE BREVET EUROPEEN

(11) **EP 0 803 640 B1**
(45) Date de publication et mention de la délivrance du brevet: **30.05.2001**
(21) Numéro de dépôt: 97400927.6
(22) Date de dépôt: 24.04.1997
(51) Int. Cl.: F01D 5/02, F02K 3/04

(54) **Turbomachine à double flux**
Doppelströmige Turbomaschine
Double flow turbomachine

(30) Priorité: 24.04.1996 FR 9605137
(43) Date de publication de la demande: 29.10.1997
(73) Titulaire: Snecma Moteurs, 75015 Paris (FR)
(72) Inventeur: Guyonnet, Xavier Jean-Michel André, 77310 - Saint Fargeau Ponthierry (FR); Wurniesky, Pascal Claude, 77176 - Savigny le Temple (FR)
(74) Mandataire: Berrou, Paul

(56) Documents cités:
- FR-A- 1 554 020
- FR-A- 2 141 435
- FR-A- 2 597 547
- GB-A- 585 331
- GB-A- 884 646
- US-A- 4 005 575

## Description

L'invention ressortit à une turbomachine à double flux.

Les conceptions de certains moteurs d'avions tels que ceux qui doivent propulser à vitesse supersonique comprennent des turbomachines à flux primaire dans lequel les gaz passent par des compresseurs, une chambre de combustion puis des turbines, et à flux secondaire, qui entoure le précédent et se mêle à lui à la sortie de la machine. La veine de flux secondaire peut être plus ou moins ouverte grâce à des volets à l'entrée et sur ses parois latérales : ils sont franchement ouverts en régime subsonique, de sorte qu'un grand débit d'air parcourt la veine secondaire et que le taux de dilution des gaz à la sortie de la machine est important, ce qui a comme avantage que le niveau d'émission sonore est réduit ; mais en régime supersonique où on désire réduire le taux de dilution, les volets sont refermés pour restreindre la superficie d'ouverture de la veine secondaire. Le brevet français 2 685 385 décrit plus complètement ce genre de turbomachines.

Une soufflante faisant partie du compresseur de la veine primaire de la turbomachine, ou d'un de ses compresseurs, est utilisée pour accélérer les gaz dans la veine secondaire. Elle comprend pour cela des aubes qui s'étendent dans les deux veines de flux et dans l'intervalle qui les sépare. Les viroles qui délimitent les deux veines de flux en les séparant de leur intervalle doivent donc être interrompues devant la soufflante, qui est munie d'une paire de plates-formes qui rétablissent le cloisonnement des veines en remplaçant les parties manquantes des Viroles. Mais des bâillements subsistent entre les plates-formes et les viroles et, malgré les joints qu'on peut éventuellement y installer, des fuites de gaz. Cette situation est particulièrement dommageable quand la soufflante est située en arrière d'un premier compresseur, car les gaz de la veine primaire, qui sont alors comprimés et chauds, peuvent facilement fuir et endommager la veine de flux secondaire supposée plus froide et dont les éléments sont construits en matériaux peu résistants à la chaleur à cause de leur moindre coût.

L'objet de l'invention est ainsi de supprimer ou tout au moins de limiter ces fuites et ces échauffements et d'améliorer en même temps le rendement de la machine.

Le brevet GB-A-585 331 décrit une turbine à gaz comportant des disques de rotor contrarotatifs sur lesquels sont montées des aubes de turbine et des aubes de compresseur, les aubes de turbine étant montées à la périphérie de chaque aube de compresseur. Un espace annulaire délimité par deux anneaux solidaires de chaque disque de rotor est aménagé entre les aubes de compresseur et les aubes de turbine et alimenté en air.

La turbomachine proposée ici est caractérisée en ce qu'une veine annulaire intermédiaire est ménagée dans l'intervalle séparant les veines de flux primaire et secondaire, au moins au niveau de la soufflante depuis les baillements situés en amont de la soufflante jusqu'aux baîllements situés en aval de la soufflante; un courant de gaz parcourt la veine et possède donc une pression dynamique qui arrête ou détourne le gaz de fuite.

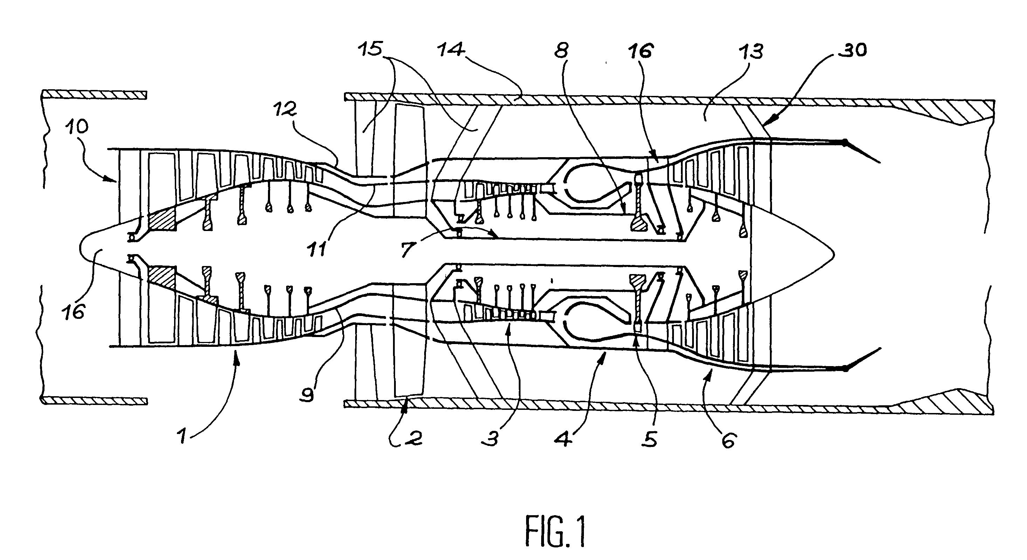

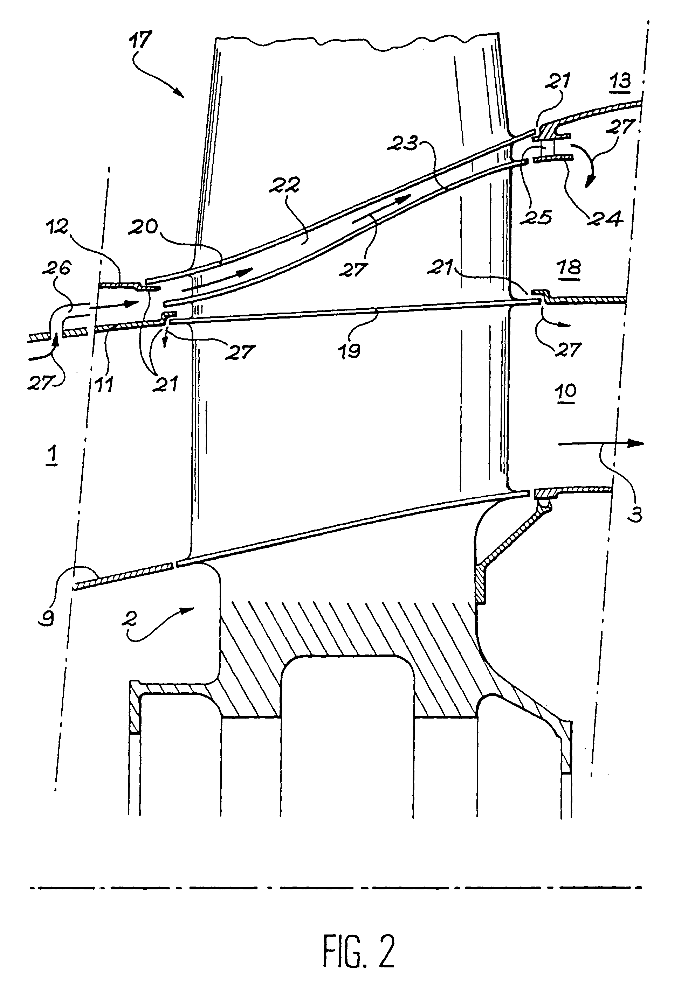

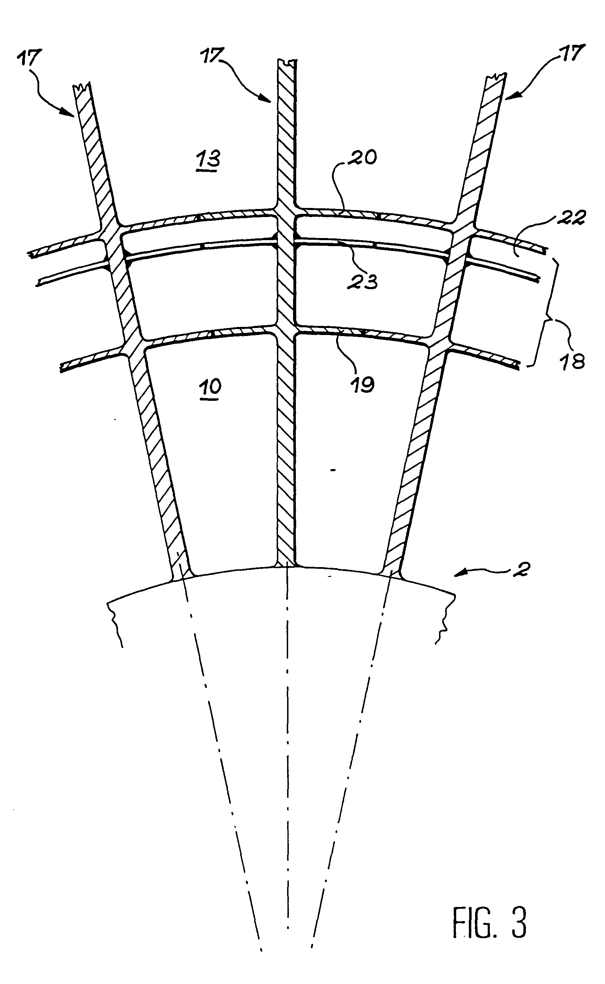

L'invention va maintenant être décrite en détail à titre illustratif et non limitatif à l'aide des figures suivantes :
■ la figure 1 représente un moteur à double flux,
■ et les figures 2 et 3 représentent l'agencement constitutif de l'invention respectivement en coupe longitudinale et en coupe diamétrale.

A la figure 1, on a représenté l'ensemble de la turbomachine en coupe longitudinale avec, d'amont en aval, un compresseur à basse pression 1, une soufflante 2, un compresseur à haute pression 3, une chambre de combustion 4, une turbine à haute pression 5 et une turbine à basse pression 6. Le compresseur à basse pression 1, la soufflante 2 et la turbine à basse pression 6 sont reliés par un premier corps tournant 7 pour tourner ensemble, alors que le compresseur à haute pression 3 et la turbine à haute pression 5 sont également liés en rotation par un second corps tournant 8. Les corps tournants 7 et 8 possèdent des portions d'une enveloppe 9, qui délimite une veine de flux primaire 10 de forme annulaire avec une virole intérieure 11 qui entoure l'enveloppe 9 et est concentrique à elle.

Une virole extérieure 12 entoure la virole précédente et lui est concentrique ; elle délimite une veine de flux secondaire 13 avec un carter 14 qui constitue l'enveloppe extérieure de la turbomachine ; les veines 10 et 13 se mêlent en aval de la turbine à basse pression 6. Enfin, des bras de support 15, 16, 30 pouvant prendre l'aspect- d'aubes de redressement de flux, relient entre eux le carter 14, et les viroles 11 et 12 assurant ainsi la cohésion de l'ensemble.

Si on se reporte maintenant plutôt aux figures 2 et 3, on voit clairement que la soufflante 2 comprend des aubes 17 qui s'étendent dans les veines de flux primaire et secondaire 10 et 13 ainsi que dans leur intervalle 18 compris entre les viroles 11 et 12. Les viroles 11 et 12 doivent être interrompues pour laisser passer les aubes 17, qui sont munies d'une plate-forme intérieure 19 et d'une plate-forme extérieure 20 annulaires et jetées respectivement entre les deux portions de la virole intérieure 11 et de la virole intérieure 12 pour rétablir autant que possible l'étanchéité des veines 10 et 13. Toutefois, il est inévitable que des bâillements 21 subsistent entre les plates-formes et les viroles, et donc des fuites de gaz de la veine de flux primaire 10 à la veine de flux secondaire 13 à travers l'intervalle 18, fuites qui sont nocives pour les raisons signalées auparavant. Les joints à labyrinthes formés de reliefs imbriqués d'un genre courant dans l'aéronautique peuvent être ajoutés pour rendre les fuites plus difficiles en imposant une perte de charge au gaz de fuite, mais leur effet est insuffisant.

C'est pourquoi l'invention complète ce dispositif ; elle consiste essentiellement en une veine intermédiaire d'écoulement de gaz 22 qui occupe une partie de l'intervalle 18 au moins devant les bâillements 21 ; cette veine est ici délimitée par la plate-forme extérieure 20 et une plate-forme intermédiaire 23 de la soufflante 2 qu'entoure la précédente à quelque distance.

La veine intermédiaire 22 est allongée en disposant un segment de virole 24 qui prolonge la plate-forme intermédiaire 23 vers l'aval et qui est relié à la virole extérieure 12 par des bras 25.

Des moyens de prélèvement 26, par exemple des vannes, sont disposés autour du compresseur à basse pression 1 pour prélever une partie du gaz qui y circule et l'insuffler dans la veine intermédiaire 22 sous forme d'un courant 27 orienté en direction longitudinale de la turbomachine, qui détourne les gaz de fuite ayant pénétré dans l'intervalle 18 de la veine de flux primaire 10 par les bâillements 21. Les plates-formes 20, 23 de forme annulaire à diamètre variable augmentant vers l'aval de la soufflante 2, forment un petit compresseur centrifuge qui permet d'élever le niveau de pression du débit de gaz qui circule entre les plates-formes 20, 23. Le niveau de pression est alors plus élevé dans le plan aval de la soufflante 2, ce qui permet au débit de gaz sortant de la veine intermédiaire 22 de pénétrer par les bâillements 21 dans la veine de flux primaire 10 où le niveau de pression est plus faible. La veine intermédiaire 22 constitue ainsi une barrière d'étanchéité empêchant les gaz chauds issus de la veine de flux primaire de pénétrer dans la veine de flux secondaire. On n'a donc pas à craindre pour l'intégrité des pièces environnant la veine de flux secondaire 13.

L'invention peut être mise en oeuvre d'autres façons, avec une veine intermédiaire 22 disposée autrement ; de même pour les moyens de prélèvements 26, qui peuvent déboucher dans une autre partie de la turbomachine.

## Revendications

1. Turbomachine à double flux primaire et secondaire, comprenant une soufflante (2) à aubes (17) occupant à la fois une veine de flux primaire (10) et une veine de flux secondaire (13) séparées par un intervalle (18), les veines de flux primaire (10) et secondaire (13) étant délimitées par deux viroles (11, 12) prolongées par deux plate-formes annulaires (19,20) de la soufflante (2) en laissant subsister des bâillements (21) en amont et en aval de la soufflante, caractérisée en ce qu'une veine intermédiaire annulaire (22) dans laquelle un courant de gaz est insufflé est ménagée dans l'intervalle (18),au moins au niveau de la soufflante entre les bâillements (21) amont et aval.

2. Turbomachine à double flux selon la revendication 1, caractérisée en ce que la veine intermédiaire (22) est délimitée en particulier par une troisième plate-forme annulaire (23) de la soufflante (2) et par une des deux plate-formes (20) qui prolongent les viroles.

3. Turbomachine à double flux selon la revendication 2, caractérisée en ce que les plates-formes qui délimitent la veine intermédiaire sont à diamètres croissants vers l'aval de la soufflante.

4. Turbomachine à double flux selon l'une quelconque des revendications 1 à 3, caractérisée en ce que le gaz provient d'un compresseur (1) de la turbomachine, qui est relié à la veine intermédiaire (22) par des moyens de prélèvement (26), et parcourt la veine intermédiaire en direction longitudinale de la turbomachine.

## Claims

1. A bypass turbojet engine comprising a fan (2) having blades (17) disposed in both a main flow path (10) and a bypass flow path (13) separated from one another by a space (18), the two flow paths (10, 13) being bounded by two shells (11, 12) prolonged by two annular platforms (19, 20) of the fan (2), gaps (21) being left upstream and downstream of the fan, characterised in that an annular intermediate flow path (22) into which a gas flow is injected is disposed in the space (18) at least near the fan between the upstream and downstream gaps (21).

2. A bypass turbojet engine according to claim 1, characterised in that the intermediate flow path (22) is bounded more particularly by a third annular platform (23) of the fan (2) and by one of the two platforms (20) which prolong the shells.

3. A bypass turbojet engine according to claim 2, characterised in that the platforms bounding the intermediate flow path increase in diameter downstream of the fan.

4. A bypass turbojet engine according to any of claims 1 to 3, characterised in that the gas is delivered by a compressor (1) of the engine, the compressor (1) being connected to the intermediate flow path (22) by sampling means (26), the gas flowing through the intermediate flow path lengthwise of the engine.

## Patentansprüche

1. Doppelstrom-Turbomaschine mit einem Primärstrom und einem Sekundärstrom
mit einem Gebläse (2) mit Schaufeln (17), die sowohl einen Primärstromkanal (10) als auch einen Sekundärstromkanal (13) besetzen, die durch einen Zwischenraum (18) voneinander getrennt sind, wobei der Primärstromkanal (10) und der Sekundärstromkanal (13) von zwei Mantelringen (11, 12) begrenzt werden, die von zwei ringförmigen Plattformen (19, 20) des Gebläses (2) verlängert werden, wobei auf der stromaufwärtigen und auf der stromabwärtigen Seite des Gebläses Lücken (21) verbleiben,
**dadurch gekennzeichnet,**
daß in dem genannten Zwischenraum (18) zumindest im Bereich des Gebläses zwischen den stromaufwärtigen und stromabwärtigen Lücken (21) ein ringförmiger Zwischenkanal (22) vorgesehen ist, in den ein Gasstrom eingeblasen wird.

2. Doppelstrom-Turbomaschine nach Anspruch 1, dadurch gekennzeichnet, daß der Zwischenkanal (22) speziell von einer dritten ringförmigen Plattform (23) des Gebläses (2) und von einer (20) der beiden die Mantelringe verlängernden Plattformen begrenzt wird.

3. Doppelstrom-Turbomaschine nach Anspruch 3, dadurch gekennzeichnet, daß die Durchmesser der den Zwischenkanal begrenzenden Plattformen in Richtung auf die stromabwärtige Seite des Gebläses größer werden.

4. Doppelstrom-Turbomaschine nach einem der Ansprüche 1 bis 3, dadurch gekennzeichnet, daß das Gas aus einem mit dem Zwischenkanal (22) durch Zapfmittel (26) verbundenen Verdichter (1) der Turbomaschine stammt und den Zwischenkanal in Längsrichtung der Turbomaschine durchläuft.
